(19) Europäisches Patentamt
European Patent Office
Office européen des brevets

(11) **EP 3 260 854 B1**

(12) **EUROPEAN PATENT SPECIFICATION**

(45) Date of publication and mention
of the grant of the patent:
**18.09.2019   Bulletin 2019/38**

(51) Int Cl.:
*F01N 3/022* (2006.01)          *F01N 3/027* (2006.01)
*F01N 13/00* (2010.01)          *G01N 15/00* (2006.01)
*G01N 27/22* (2006.01)          *G01M 15/10* (2006.01)
*G01N 15/06* (2006.01)

(21) Application number: **16752526.0**

(22) Date of filing: **17.02.2016**

(86) International application number:
**PCT/JP2016/054619**

(87) International publication number:
**WO 2016/133140 (25.08.2016 Gazette 2016/34)**

(54) **SENSOR AND METHOD FOR DETECTING WATER**

SENSOR UND VERFAHREN ZUM DETEKTIEREN VON WASSER

SONDE ET PROCÉDÉ POUR DÉTECTER DE L'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **20.02.2015   JP 2015031525**

(43) Date of publication of application:
**27.12.2017   Bulletin 2017/52**

(73) Proprietor: **Isuzu Motors Limited
Tokyo 140-8722 (JP)**

(72) Inventors:
• **UCHIYAMA Tadashi
Fujisawa-shi
Kanagawa 252-0881 (JP)**
• **MURASAWA Naoto
Fujisawa-shi
Kanagawa 252-0881 (JP)**

(74) Representative: **Miller Sturt Kenyon
9 John Street
London WC1N 2ES (GB)**

(56) References cited:
**WO-A1-2011/004747      DE-A1-102009 024 782
JP-A- 2007 524 786      JP-A- 2008 008 151
JP-A- 2010 151 553      JP-A- 2010 275 917
JP-A- 2011 220 974      JP-A- 2012 037 370
JP-A- 2013 104 801      JP-A- 2014 159 784
US-A1- 2011 047 978      US-A1- 2012 102 924**

## Description

## Technical Field

The present invention relates to a sensor for detecting an amount of particular matter (hereinafter, referred to as PM) contained in exhaust gas.

## Background Art

Sensors for detecting an amount of PM contained in exhaust gas to be discharged from an internal combustion engine are known. As the sensors, a sensor is also known, in which sensor electrode portions are arranged in an exhaust pipe and PM is detected based on an electrostatic capacitance change amount occurred as the PM is adhered on the sensor electrode portions (e.g., see Patent Reference 1).

In the sensor, determination on failure of the sensor is performed using a change in peak shape of an electrostatic capacitance appearing if condensate water, which is created by condensation of moisture contained in exhaust gas, is adhered on the sensor electrode portions.

Patent Document 2 discloses a system for operation of an engine having a particulate matter sensor. The system comprises an internal combustion engine which further comprises a plurality of cylinders. The engine is controlled by an electronic engine controller. The engine includes a combustion chamber and cylinder walls with a piston positioned therein and connected to crankshaft. The combustion chamber communicates with an intake manifold and an exhaust manifold via respective intake and exhaust valves. Degradation of a particulate matter sensor is indicated after a temperature of a substrate of the particulate matter sensor exceeds a threshold temperature and an output of the particulate matter sensor is below a threshold value.

Patent Document 3 discloses a method involving absorbing contents contained in an exhaust gas mixture using a selective catalytic reduction catalytic converter. The presence of liquid water in the exhaust gas mixture is detected in the converter downstream of an inlet position of an exhaust manifold. The effectiveness of the converter is determined when reducing the content of nitrogen oxides in the exhaust gas mixture. This is achieved by converting nitrogen oxides with a reducing agent. Patent Document 3 also includes a measuring arrangement for determining the effectiveness of a catalytic converter.

Patent Document 4 discloses an apparatus for measuring a particulate substance which includes a plurality of cells sectioned by a porous partition wall, alternately sealed at an upstream side and a downstream side. Electrodes are respectively inserted from an open side into the four electrode cells adjacent to a measurement cell. Particulate matter (PM) accumulation quantity calculation units calculate the quantity of accumulated PM based on an electrostatic capacitance between the electrodes. In an unsealed side within the measurement cell, an orifice is provided to narrow an opening of the measurement cell.

Patent Document 5 discloses a particulate matter (PM) sensor which is capable of detecting the amount of PM accumulated in a diesel particulate filter (DPF). Two electrodes which are opposed to each other on an upstream side and a downstream side form a capacitor. These electrodes are provided in a DPF having a porous filter body which is partitioned by a large number of separation walls. The amount of PM collected in the DPF is detected on the basis of the capacitance of the capacitor.

## Prior Art Reference

## Patent Reference

Patent Document 1: JP-A-2010-275917
Patent Document 2: US 2011/0047978 A
Patent Document 3: DE 10 2009 024 782 A
Patent Document 4: JP 2014 159784 A
Patent Document 5: WO 2011/004747 A

## Disclosure of the Invention

## Problems to be Solved

In terms of protection of various sensors and the like, it is preferable to reliably detect the condensate water. Also, water is likely to be infiltrated into the exhaust system of the internal combustion engine from the outside, and for the same reason, it is preferable to reliably detect water infiltrated from the outside. However, the sensor as described above is configured to determine a failure of the sensor itself and thus does not take into account detection of water present in the exhaust system of the internal combustion engine, such as condensate water or water infiltrated from the outside.

An object of the present disclosure is to provide a sensor in which it is possible to detect water present in the exhaust system of the internal combustion engine.

## Means for Solving the Problems

According to a first aspect of the invention there is provided a sensor according to claim 1.

According to a second aspect of the invention there is provided a method for detecting water present in an exhaust system of an internal combustion engine according to claim 4.

## Advantageous Effects of Invention

According to the sensor of the present disclosure, it is possible to detect water present in the exhaust system of the internal combustion engine.

## Brief Description of Drawings

Fig. 1 is a schematic configuration view showing an example of an exhaust system to which a PM sensor of a first embodiment is applied.

Fig. 2 is a schematic partially sectional view showing the PM sensor of the first embodiment.

Fig. 3A is a partially enlarged sectional view explaining collecting of PM.

Fig. 3B is a partially enlarged sectional view explaining a water-infiltrated state.

Fig. 4A is a chart explaining a change over time in electrostatic capacitance change amount of a PM sensor as an amount of PM is increased.

Fig. 4B is a chart explaining a change over time in electrostatic capacitance change amount of the PM sensor due to water infiltration.

Fig. 4C is a chart explaining a change over time in electrostatic capacitance in a case where water infiltration is occurred while PM is being collected.

Fig. 5 is a schematic partially sectional view showing a PM sensor of a second embodiment.

Fig. 6A is a schematic perspective view of each of sensor units according to a third embodiment.

Fig. 6B is a schematic exploded perspective view of each of sensor units according to the third embodiment.

## Mode for Carrying Out the Invention

Hereinafter, sensors according to respective embodiments of the present invention will be described with reference to the accompanying drawings. The same components will be designated by the same reference numerals, and the names and functions thereof are the same. Therefore, the detailed descriptions thereof will not be repetitively made.

[First Embodiment]

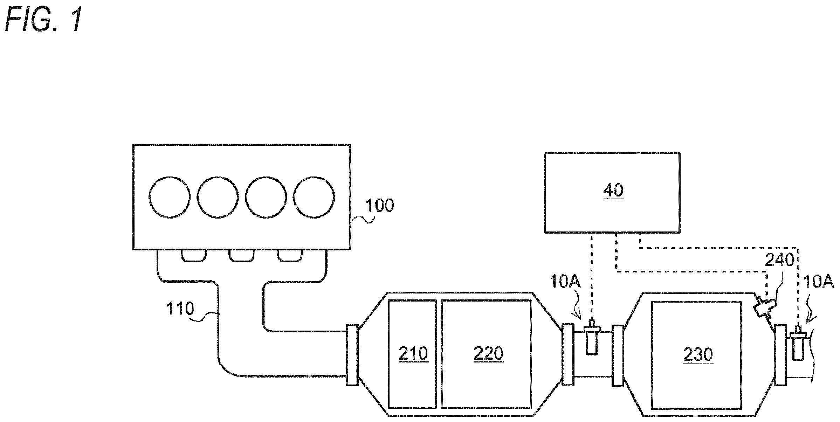

Fig. 1 is a schematic configuration view showing an example of an exhaust system of a diesel engine (hereinafter, simply referred to as engine) 100, to which a PM sensor 10A according to the first embodiment are applied. In an exhaust pipe 110 of the engine 100, an oxidation catalyst 210, a diesel particulate filter (DPF, hereinafter, simply also referred to as filter) 220, a NOx purification catalyst 230, a NOx/lambda sensor 240 and the like are provided in this order from an upstream side in an exhaust direction.

The oxidation catalyst 210 is configured to oxidize unburned fuel (hydrocarbon (HC)) and to increase a temperature of the exhaust gas when the unburned fuel is supplied thereto. The filter 220 is formed so that a plurality of cells divided by porous partition walls are arranged along exhaust gas flow direction and are alternately plugged at upstream and downstream sides of the cells. The filter 220 is configured so that PM in the exhaust gas is collected by micro-holes or surfaces of the partition walls and if an estimated amount of PM accumulated thereon reaches a predetermined amount, a so-called filter forced regeneration of combusting and removing the accumulated PM thereon is executed. The filter forced regeneration is performed, for example, by supplying unburned fuel to the oxidation catalyst 210 upstream of the filter 220 and thus increasing a temperature of the exhaust gas to be introduced into the filter 220 to a PM combustion temperature. The NOx purification catalyst 230 is configured to reduce and purify NOx in the exhaust gas, and the NOx/lambda sensor 240 is configured to detect a NOx concentration and excess air ratio in the exhaust gas. The PM sensor 10A of the present embodiment is provided in the exhaust pipe 110, for example, downstream of the DPF 220 and also upstream of the NOx purification catalyst 230, but may be provided in the exhaust pipe 110 downstream of the NOx purification catalyst 230.

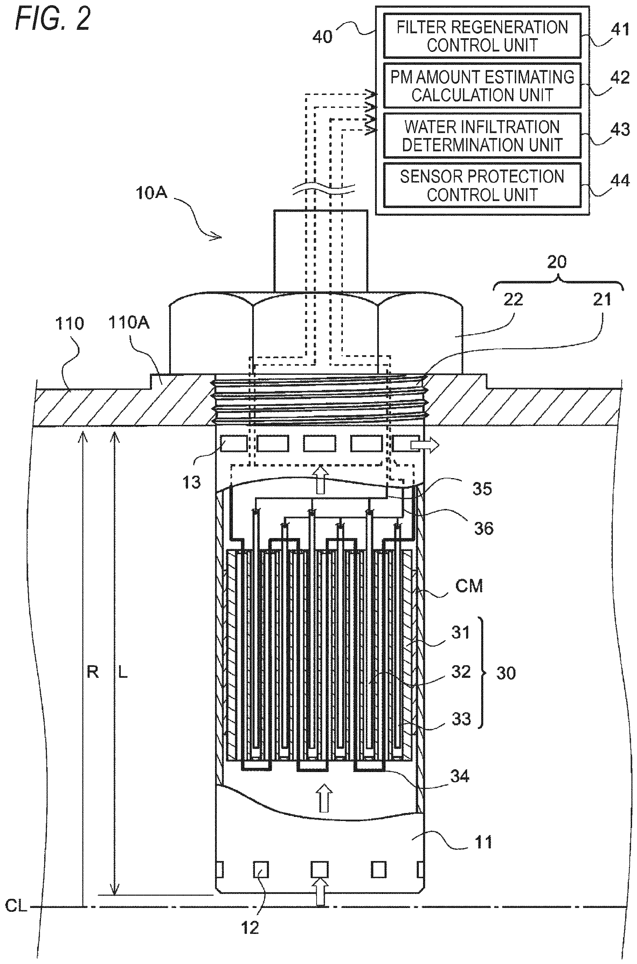

Next, the detailed configuration of the PM sensor 10A according to the first embodiment will be described with reference to Fig. 2. The PM sensor 10A includes a case member 11 inserted in the exhaust pipe 110, a pedestal portion 20 configured to attach the case member 11 to the exhaust pipe 110, a sensor unit 30 accommodated in the case member 11 and a control unit 40.

The case member 11 has a shape of a bottomed cylinder, of which a bottom side (a lower end side in the shown example) is closed. A length L of the case member 11 in a cylinder axis direction is substantially the same as a radius R of the exhaust pipe 110 so that a cylindrical wall portion at the bottom side protrudes to a location near to a center axis CL of the exhaust pipe 110. Meanwhile, in the following descriptions, the bottom side of the case member 11 is referred to as a distal end side, and an opposite side to the bottom side is referred to as a base end side of the case member 11.

A cylindrical wall portion of the case member 11 at the distal end side is provided with a plurality of inflow ports 12 arranged to be spaced from each other in a circumferential direction. Also, a cylindrical wall portion of the case member 11 at the base end side is provided with a plurality of outflow ports 13 arranged to be spaced from each other in the circumferential direction. A total opening area $S_{12}$ of the inflow ports 12 is smaller than a total opening area $S_{13}$ of the outflow ports 13 ($S_{12} < S_{13}$). That is, an exhaust flow velocity $V_{12}$ in the vicinity of the inflow ports 12 becomes slower than an exhaust flow velocity $V_{13}$ in the vicinity of the outflow ports 13 ($V_{12} < V_{13}$), so that a pressure $P_{12}$ at the inflow ports 12 becomes higher than a pressure $P_{13}$ at the outflow ports 13 ($P_{12} > P_{13}$). Thus, the exhaust gas smoothly flows into the case member 11 through the inflow ports 12, and the exhaust gas in the case member 11 smoothly flows out through the outflow ports 13 into the exhaust pipe 110.

The pedestal portion 20 has a male screw portion 21 and a nut portion 22. The male screw portion 21 is provided on a base end portion of the case member 11 and is configured to close an opening of the case member 11 at the base end side. The male screw portion 21 is screwed with a female screw portion of a boss portion 110A formed on the exhaust pipe 110. The nut portion 22 is, for example, a hexagonal nut and is fixed to an upper end portion of the male screw portion 21. The male screw portion 21 and the nut portion 22 have through-holes (not shown) formed therein, through which conductive wires 35, 36 and the like as described below are to be inserted.

The sensor unit 30 has a filter member 31, a plurality of pairs of electrode members 32, 33, and an electrical heater 34.

The filter member 31 is formed so that a plurality of cells, which form lattice-shaped exhaust flow paths divided by partition walls of, for example, porous ceramics, are alternately plugged at upstream and downstream sides thereof. The filter member 31 is held on an inner peripheral surface of the case member 11 via a cushion member CM in a state where a flow path direction of the cells is arranged to be substantially parallel to an axial direction (an upward and downward direction in the figure) of the case member 11.

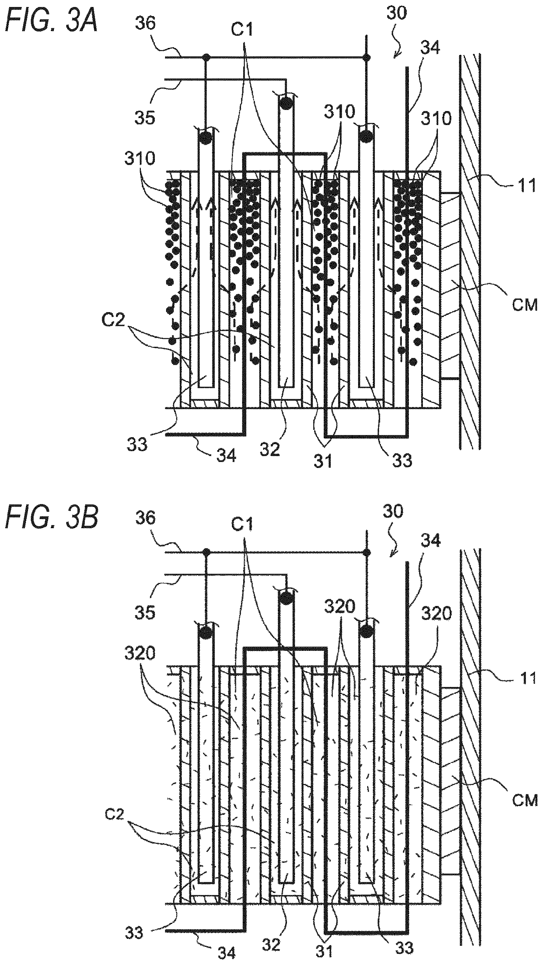

As enlargedly shown in Fig. 3A, PM 310 in the exhaust gas introduced in the case member 11 through the inflow ports 12 is collected by surfaces or micro-holes of partition walls as the exhaust gas flows from cells C1 plugged at the downstream side thereof into cells C2 plugged at the upstream side thereof as shown by broken line arrows. Meanwhile, in the following description, the cell plugged at the downstream side thereof is referred to as a measurement cell C1 and the cell plugged at the upstream side thereof is referred to as an electrode cell C2.

As shown in Fig. 2, the electrode members 32, 33 are, for example, conductive metal wires and are alternately inserted into the electrode cells C2, which face each other with the measurement cell C1 interposed therebetween, from the downstream side (unplugged side) thereof, thereby forming a capacitor. The electrode members 32, 33 are respectively connected to an electrostatic capacitance detection circuit (not shown) embedded in the control unit 40, via the conductive wires 35, 36.

The electrical heater 34 is, for example, an electric heating wire and is configured to generate heat by being energized and thus to directly heat the sensor filter 31, thereby executing a so-called filter regeneration of combusting and removing the PM accumulated in the measurement cells C1. Accordingly, the electrical heater 34 is formed to be bent into a continuous S-shape, and linear portions thereof parallel to each other are inserted in the respective measurement cells C1 along the flow paths thereof.

The control unit 40 is an example of the controller of the present invention and has a filter regeneration control unit 41, a PM amount estimating calculation unit 42, a water infiltration determination unit 43 and a sensor protection control unit 44 as individual functional elements. The functional elements are described as being contained in the control unit 40, which is a unitary hardware, but may be provided in separate hardware.

The filter regeneration control unit 41 is configured to determine whether or not a filter regeneration condition is satisfied, based on an electrostatic capacitance Cp between the electrode members 32, 33, which is detected by an electrostatic capacitance detection circuit (not shown), and then to execute filter regeneration control of turning on (energizing) the electrical heater 34 in a case where the filter regeneration condition is satisfied. The electrostatic capacitance Cp between the electrode members 32, 33 is expressed by the following equation 1, where $\varepsilon$ is a dielectric constant of a medium between the electrode members 32, 33, S is a surface area of the electrode members 32, 33, and d is a distance between the electrode members 32, 33.

[Equation 1]

$$Cp = \sum\left(\varepsilon \times \frac{s}{d}\right) \quad \cdots \quad (1)$$

In the equation 1, the surface area S of the electrode members 32, 33 is constant, and when the dielectric constant $\varepsilon$ and the distance d are changed by the PM collected in the measurement cells C1, the electrostatic capacitance Cp is correspondingly changed. That is, the electrostatic capacitance Cp between the electrode members 32, 33 and an amount of the PM accumulated in the sensor filter 31 have a proportional relation.

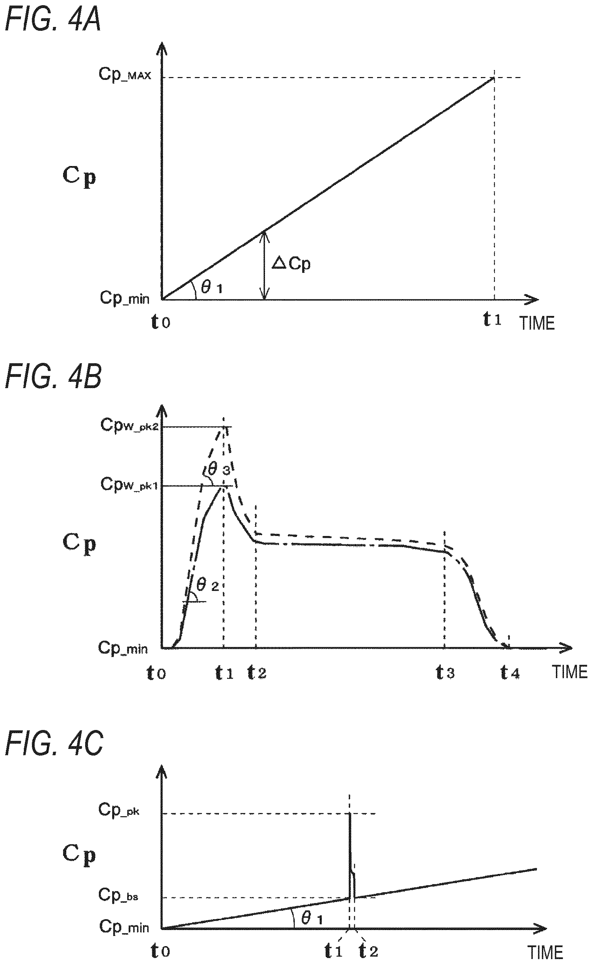

In the example shown in Fig. 4A, the electrostatic capacitance between Cp the electrode member 32, 33 is increased at a change amount per unit time $\theta_1$ ($\Delta Cp/\Delta t$) as the PM is accumulated in the measurement cells C1. If the electrostatic capacitance Cp reaches a predetermined electrostatic capacitance upper threshold $C_{P\_max}$, which indicates an upper limit amount of the accumulated PM, the filter regeneration control unit 41 determines that the filter regeneration condition is satisfied and thus starts filter regeneration of turning on the electrical heater 34. The filter regeneration continues until the electrostatic capacitance Cp is lowered to a predetermined electrostatic capacitance lower threshold $C_{P\_min}$, which indicates that the PM is completely removed.

The PM amount estimating calculation unit 42 is configured to estimate a total PM amount $m_{PM}$ in the exhaust gas discharged from the filter 220, based on an electrostatic capacitance change amount $\Delta Cp$ of the PM sensor 10A during a regeneration interval period (from the end of the filter regeneration to the start of the next filter regeneration). The PM amount $m_{PM}$ collected in the filter member 31 during the regeneration interval period is obtained by the following equation 2, in which the electrostatic capacitance change amount $\Delta Cp$ of the PM sensor 10A is multiplied by a linear coefficient $\beta$.
[Equation 2]

$$m_{PM} = \beta \cdot \Delta Cp \quad \cdots \quad (2)$$

The water infiltration determination unit 43 is configured to determine whether or not water is present in the exhaust system, based on a peak value of the electrostatic capacitance Cp or an electrostatic capacitance change amount per unit time $\theta$ ($\Delta Cp/\Delta t$) of the PM sensor 10A. Then, when water is present in the exhaust system, the water infiltration determination unit 43 is configured to estimate an amount of the water.

If water is present in the exhaust system, as shown in Fig. 3B, some of the water is held in the filter member 31. Specifically, the water is held in the measurement cells C1 and electrode cells C2 equipped in the filter member 31. Since the measurement cells C1 and electrode cells C2 are a lattice-shaped elongated space, the water 320 is smoothly introduced and held in each of the cells C1, C2.

If the water 320 is held in the filter member 31, the peak value of the electrostatic capacitance Cp in the PM sensor 10A is significantly higher than that of a case where PM is accumulated therein, and also the electrostatic capacitance change amount $\theta$ until reaching the peak value is steeper (greater in gradient) than that of the case where PM is accumulated therein. Further, as an amount of water 320 held in the filter member 31 is increased, the peak value of the electrostatic capacitance Cp becomes higher, and also as the amount of water 320 held in the filter member 31 is increased, the electrostatic capacitance change amount per unit time $\theta$ ($\Delta Cp/\Delta t$) becomes steeper.

As shown by a one-dot chain line in Fig. 4B, if a certain amount of water 320 is held in the filter member 31, the electrostatic capacitance Cp is increased at a change amount $\theta_2$, which is significantly steeper than a change amount $\theta_1$ of the case when PM is accumulated therein, during a period until the electrostatic capacitance Cp reaches a peak value $Cp_{w-pk1}$ (times $t_0$ to $t_1$). As shown by a broken line in Fig. 4B, if more water 320 is held in the filter member 31, the electrostatic capacitance Cp is increased at a change amount $\theta_3$, which is even steeper than the change amount $\theta_2$, until reaching a peak value $Cp_{w\_pk2}$. In both the cases, if the water 320 is evaporated from the filter member 31 due to flowing of exhaust gas therethrough, the electrostatic capacitance Cp is decreased to $Cp_{\_min}$ (times $t_3$ to $t_4$).

Therefore, the water infiltration determination unit 43 determines that water 320 is present in the exhaust system, if at least one of determination conditions, including a case where the peak value $Cp_{w\_pk}$ of the electrostatic capacitance is equal to or higher than a predetermined upper threshold and a case where the change amount $\theta$ in the electrostatic capacitance Cp is equal to or greater than a predetermined upper threshold is satisfied. Also, the water infiltration determination unit 43 determines an amount of water present based on a value of the peak value $Cp_{w\_pk}$ of the electrostatic capacitance. Determining the amount of water can be performed, for example, by using a map for determination. The map can be created by changing an amount of water held in the filter member 31 and then measuring a corresponding peak value $Cp_{w\_pk}$ of the electrostatic capacitance.

Fig. 4C shows an example of a case where water is infiltrated from the outside while PM is being collected. As shown in Fig. 4C, the electrostatic capacitance Cp is increased at a change amount $\theta_1$ corresponding to an amount of accumulated PM during a period from time $t_0$ to time $t_1$. Thereafter, the electrostatic capacitance is steeply increased from $Cp_{\_bs}$ to $Cp_{\_pk}$ at the time $t_1$ and then returns to $Cp_{\_bs}$ at a time $t_2$, and then based thereon, the water infiltration determination unit 43 determines that during a period from time $t_1$ to time $t_2$, the predetermined determination condition is satisfied and thus water 320 is infiltrated into the exhaust system from the outside.

The sensor protection control unit 44 is configured to protect various sensors by prohibiting energization to the sensors, when the water infiltration determination unit 43 determines that water is present in the exhaust system. In the present embodiment, the sensor protection control unit 44 protects the NOx/lambda sensor 240 by prohibiting energization to a heater (not shown) equipped in the NOx/lambda sensor 240.

As such, the water infiltration determination unit 43 can detect water (condensate water or infiltrated water) present in the exhaust system of the engine 100, based on the change amount per unit time $\theta$ ($\Delta Cp/\Delta T$) in electrostatic capacitance Cp between the electrode members 32, 33 or the peak value $Cp_{\_pk}$ thereof. In this way, since water is detected based on the electrostatic capacitance Cp between the electrode members 32, 33, water present in the exhaust system can be detected. In addition, detection of water is performed by the PM sensor 10A, which is intended to detect an amount of PM. That is, the PM sensor 10A is used both for detecting an amount of PM and for detecting water present in the exhaust system. Accordingly, it is unnecessary to separately provide a dedicated sensor, thereby achieving a simplified configuration.

Further, the sensor protection control unit 44 prohibits energization to various sensors during a period in which the water infiltration determination unit 43 is determining that water is present in the exhaust system. Therefore, the various sensors can be protected.

[Second Embodiment]

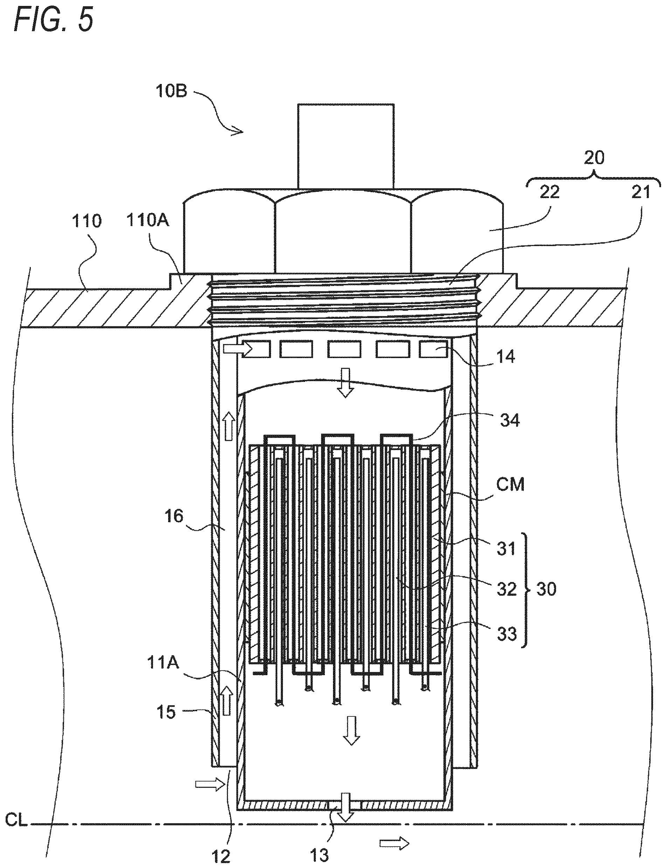

Next, a PM sensor 10B according to the second embodiment will be described in detail with reference to Fig. 5. The PM sensor 10B of the second embodiment is configured so that the case member in the PM sensor 10A of the first embodiment has a double pipe structure. The other components have the same structures, and accordingly the detailed descriptions thereof will be omitted. Also, some components, such as the control unit 40 and the like, are not shown.

The case member of the second embodiment has a cylindrical bottomed inner case portion 11A and a cylindrical outer case portion 15 surrounding a cylindrical outer peripheral surface of the inner case portion 11A.

The inner case portion 11A is formed to have an axial length greater than that of the outer case portion 15 so that a distal end side thereof protrudes relative to the outer case portion 15. Also, a bottom portion of the inner case portion 11A is provided with an outflow port 13 for allowing exhaust gas in the inner case portion 15 to flow into an exhaust pipe 110. Further, a cylindrical wall portion of the inner case portion 11A at a base end side thereof is provided with a plurality of passage ports 14 arranged to be spaced with each other in a circumferential direction. The passage ports 14 are configured to allow exhaust gas in a flow path 16 defined between an outer peripheral surface of the inner case portion 11A and an inner peripheral surface of the outer case portion 15 to flow into the inner case portion 11A.

On a downstream end of the flow path 16, a circular ring-shaped inflow port 12 defined between the cylindrical wall portion of the inner case portion 11A at the distal end side thereof and the distal end portion of the outer case portion 15 is formed. An opening area $S_{12}$ of the inflow port 12 is formed to be smaller than an opening area $S_{13}$ of the outflow port 13 ($S_{12} < S_{13}$).

That is, the exhaust gas flowing through the exhaust pipe 110 collides with the cylindrical wall surface of the inner case portion 11A protruding distally relative to the outer case portion 15 and thus is smoothly introduced into the flow path 16 through the inflow port 12 arranged near to a center axis CL of the exhaust pipe 110. Then, the exhaust gas flowing through the flow path 16 is introduced into the inner case portion 11 through the passage ports 14, passes through the filter member 31, and then smoothly flows out through the outflow port 13 arranged near to the center axis CL of the exhaust pipe 110 into the exhaust pipe 110. As such, in the PM sensors 10B of the second embodiment, the inflow port 12 and the outflow port 13 are arranged near to the center axis CL where an exhaust flow velocity is highest in the exhaust pipe 110, so that it is possible to effectively increase a flow rate of the exhaust gas passing through the sensor filter 31.

[Third Embodiment]

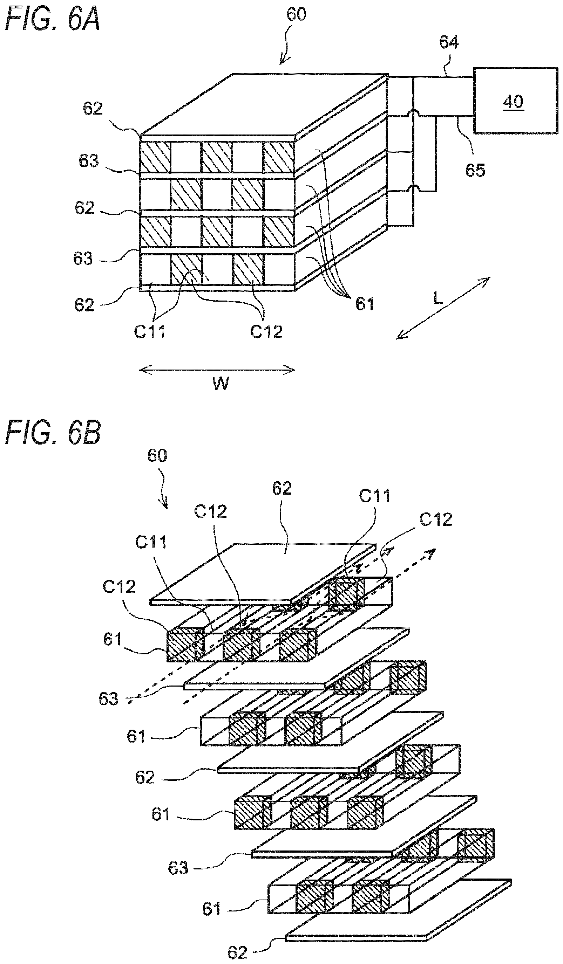

Next, a PM sensor according to the third embodiment will be described in detail with reference to Fig. 6. The PM sensor of the third embodiment is configured so that the sensor unit 30 of the first embodiment is a stack type. The other components have the same structures, and accordingly the detailed descriptions and illustrations thereof will be omitted.

Fig. 6A is a perspective view of the sensor unit 60 of the third embodiment and Fig. 6B is an exploded perspective view of the sensor unit 60. The sensor unit 60 has a plurality of filter layers 61 and a plurality of electrode plates 62, 63.

The filter layer 61 is formed so that a plurality of cells, which are divided by partition walls of, for example, porous ceramics or the like and form exhaust flow paths, are alternately plugged at upstream and downstream sides thereof and the cells are arranged in parallel in one direction in a cuboid shape. PM contained in the exhaust gas is collected by surfaces or micro-holes of the partitions walls of the cells C11 as the exhaust gas flows from the cells C11 plugged at the downstream side thereof into the cells C12 plugged at the upstream side thereof as shown by broken line arrows in Fig. 6B. Meanwhile, in the following description, a flow path direction of the cells is referred to as a longitudinal direction (an arrow L in Fig. 6A) of the sensor unit 60, and a direction perpendicular to the flow path direction of the cells is referred to as a width direction (an arrow W in Fig. 6A) of the sensor unit 60.

The pair of electrode plates 62, 63 are conductive members having, for example, a flat plate shape, and external dimensions thereof in the longitudinal direction L and the width direction W are substantially the same as those of the filter layer 61. The pair of electrode plates 62, 63 are alternately stacked with the filter layer 61 interposed therebetween and are respectively connected to an electrostatic capacitance detection circuit (not shown) embedded in the control unit 40 via conductive wires 64, 65.

That is, the pair of electrode plates 62, 63 are arranged to face each other and the filter layer 61 are interposed between the electrode plates 62, 63, so that the entire cells C11 form a capacitor. As such, in the PM sensor of the third embodiment, the entire cells C11 are configured as the capacitor due to the electrode plates 62, 63 having a flat plate shape, so that it is possible to effectively secure an electrode surface area S and to increase an absolute value of a detectable electrostatic capacitance. Also, the distance d between the electrodes corresponds to a pitch of the cells and is uniform, so that it is possible to effectively suppress the non-uniformity of an initial electrostatic capacitance.

Meanwhile, when combusting and removing the PM accumulated in the cells C11, a voltage may be directly applied to the electrode plates 62, 63 or a heater board or the like (not shown) may be provided between the filter layer 61 and the electrode plates 62, 63.

[Others]

The present invention is not limited to the foregoing embodiments and changes thereof can be appropriately made without departing from the scope of the invention as defined by the appended claims.

This application is based on Japanese Patent Application No. 2015-031525 filed on February 20, 2015.

**Industrial Applicability**

The sensor of the present invention has the effect that it is possible to detect water present in an exhaust system of an internal combustion engine and thus is useful in that sensors therein can be protected.

**Reference Signs List**

| 10A, 10B | PM sensor |
|---|---|
| 11 | Case member |
| 12 | Inflow port |
| 13 | Outflow port |
| 20 | Pedestal portion |
| 21 | Male screw portion |
| 22 | Nut portion |
| 30 | Sensor unit |
| 31 | Filter member |
| 32, 33 | Electrode member |
| 34 | Electrical heater |
| 40 | Control unit |
| 41 | Filter regeneration control unit |
| 42 | PM amount estimating calculation unit |
| 43 | Water infiltration determination portion |
| 44 | Sensor protection control unit |

**Claims**

1. A sensor comprising:

   a sensor unit (30) arranged in an exhaust system of an internal combustion engine and including: a filter member (31) having a plurality of cells divided by porous partition walls and collecting particulate matter in exhaust gas; and at least one pair of electrode members (32, 33) arranged to face each other with one of the plurality of cells interposed therebetween so as to form a capacitor; and
   a controller estimating an amount of the particulate matter in the exhaust gas and detecting water present in the exhaust system of the internal combustion engine, based on an electrostatic capacitance (Cp) between the pair of electrode members (32, 33),

   and **characterized in that**:
   the controller is configured to determine an amount of water present in the exhaust system based on a peak value ($Cp_{pk}$) of the electrostatic capacitance (Cp) when water is present in the exhaust system, wherein as the amount of water increases the peak value ($Cp_{pk}$) of the electrostatic capacitance (Cp) becomes higher.

2. The sensor (10A, 10B) according to claim 1, wherein the controller estimates the amount of the particulate matter in the exhaust gas based on an electrostatic capacitance (Cp) change amount between the pair of electrode members (32, 33) and detects the water present in the exhaust system of the internal combustion engine based on at least one of an electrostatic capacitance (Cp) change amount per unit time between the pair of electrode members (32, 33) and a peak value ($Cp_{pk}$) of the electrostatic capacitance (Cp).

3. The sensor (10A, 10B) according to claim 1 or 2, wherein the filter member (31) is a filter layer in which the plurality of cells are arranged in parallel in one direction, and
   wherein the pair of electrode members (32, 33) is a pair of flat plate-shaped electrodes arranged to face each other with the filter layer interposed therebetween.

4. A method for detecting water present in the exhaust system of the internal combustion engine; including a sensor (10A, 10B) comprising:

   a sensor unit (30) is arranged in an exhaust system of an internal combustion engine and includes: a filter member (31) having a plurality of cells divided by porous partition walls and collecting particulate matter in exhaust gas; and at least one pair of electrode members (32, 33) arranged to face each other with one of the plurality of cells interposed therebetween so as to form a capacitor; and a control unit (40),
   operating the control unit (40) to execute the steps of:

   estimating an amount of the particulate matter in the exhaust gas based on an electrostatic capacitance (Cp) between the pair of electrode members (32, 33);
   detecting water present in the exhaust system of the internal combustion engine based on the electrostatic capacitance (Cp) between the pair of electrode members (32, 33); and **characterized by**:
   determining an amount of water present in the exhaust system based on a peak value ($Cp_{pk}$) of the electrostatic capacitance (Cp) when water is present in the exhaust system, wherein as the amount of water increases the peak value ($Cp_{pk}$) of the electrostatic capacitance (Cp) becomes higher.

**5.** The method of claim 4,
wherein the estimating step includes estimating the amount of the particulate matter in the exhaust gas based on an electrostatic capacitance (Cp) change amount between the pair of electrode members (32, 33), and
wherein the detecting step includes detecting the water present in the exhaust system of the internal combustion engine based on at least one of an electrostatic capacitance (Cp) change amount per unit time between the pair of electrode members (32, 33) and a peak value ($Cp_{pk}$) of the electrostatic capacitance (Cp).

**6.** The method of claim 4 or 5,
wherein the filter member (31) is a filter layer in which the plurality of cells are arranged in parallel in one direction, and
wherein the pair of electrode members (32, 33) is a pair of flat plate-shaped electrodes arranged to face each other with the filter layer interposed therebetween.

**Patentansprüche**

**1.** Sensor, umfassend:
eine Sensoreinheit (30), die in einem Abgassystem eines Verbrennungsmotors angeordnet ist und umfasst:

ein Filterelement (31), das eine Vielzahl von Zellen aufweist, die durch poröse Trennwände unterteilt sind und Feststoffteilchen in Abgas sammeln; und mindestens ein Paar von Elektrodenelementen (32, 33), die so angeordnet sind, dass sie einander gegenüberliegen, wobei eine von der Vielzahl der Zellen dazwischen angeordnet ist, um einen Kondensator zu bilden; und eine Steuereinrichtung, die eine Menge der Feststoffteilchen in dem Abgas schätzt und das in dem Abgassystem des Verbrennungsmotors vorhandene Wasser erfasst, basierend auf einer elektrostatischen Kapazität (Cp) zwischen dem Paar von Elektrodenelementen (32, 33), und **dadurch gekennzeichnet, dass**:
die Steuereinrichtung konfiguriert ist, um eine in dem Abgassystem vorhandene Wassermenge basierend auf einem Spitzenwert ($Cp_{pk}$) der elektrostatischen Kapazität (Cp) zu bestimmen, wenn Wasser in dem Abgassystem vorhanden ist, wobei, wenn die Wassermenge zunimmt, der Spitzenwert ($Cp_{pk}$) der elektrostatischen Kapazität (Cp) höher wird.

**2.** Sensor (10A, 10B) nach Anspruch 1,
wobei die Steuereinrichtung die Menge der Feststoffteilchen in dem Abgas basierend auf einem Änderungsbetrag der elektrostatischen Kapazität (Cp) zwischen dem Paar von Elektrodenelementen (32, 33) schätzt und das in dem Abgassystem des Verbrennungsmotors vorhandene Wasser basierend auf mindestens einem von einem Änderungsbetrag der elektrostatischen Kapazität (Cp) pro Zeiteinheit zwischen dem Paar von Elektrodenelementen (32, 33) und einem Spitzenwert ($Cp_{Pk}$) der elektrostatischen Kapazität (Cp) erfasst.

**3.** Sensor (10A, 10B) nach Anspruch 1 oder 2,
wobei das Filterelement (31) eine Filterschicht ist, in der die Vielzahl von Zellen in einer Richtung parallel zueinander angeordnet ist, und
wobei das Paar der Elektrodenelemente (32, 33) ein Paar flacher plattenförmiger Elektroden ist, die so angeordnet sind, dass sie einander zugewandt sind, wobei die Filterschicht dazwischen angeordnet ist.

**4.** Verfahren zum Erfassen von Wasser, das in dem Abgassystem des Verbrennungsmotors vorhanden ist;
das einen Sensor (10A, 10B) beinhaltet, der umfasst:
eine Sensoreinheit (30), die in einem Abgassystem eines Verbrennungsmotors angeordnet ist und umfasst:

ein Filterelement (31), das eine Vielzahl von Zellen aufweist, die durch poröse Trennwände unterteilt sind und Feststoffteilchen in Abgas sammeln; und mindestens ein Paar von Elektrodenelementen (32, 33), die so angeordnet sind, dass sie einander gegenüberliegen, wobei eine von der Vielzahl der Zellen dazwischen angeordnet ist, um einen Kondensator zu bilden; und eine Steuereinheit (40),
Betreiben der Steuereinheit (40) zum Ausführen der Schritte von:

dem Schätzen einer Menge der Feststoffteilchen in dem Abgas basierend auf einer elektrostatischen Kapazität (Cp) zwischen dem Paar von Elektrodenelementen (32, 33) ;
dem Erfassen von Wasser, das in dem Abgassystem des Verbrennungsmotors vorhanden ist, basierend auf der elektrostatischen Kapazität (Cp) zwischen dem Paar von Elektrodenelementen (32, 33); und **gekennzeichnet ist durch**:
das Bestimmen einer in dem Abgassystem vorhandenen Wassermenge basierend auf einem Spitzenwert ($Cp_{pk}$) der elektrostatischen Kapazität (Cp), wenn Wasser in dem Abgassystem vorhanden ist, wobei, wenn die Wassermenge zunimmt, der Spitzenwert ($Cp_{Pk}$) der elektrostatischen Kapazität (Cp) höher wird.

**5.** Verfahren nach Anspruch 4,
wobei der Schätzschritt das Schätzen der Menge der Feststoffteilchen in dem Abgas basierend auf einem Änderungsbetrag der elektrostatischen Kapazität (Cp) zwischen dem Paar von Elektrodenelementen (32, 33) beinhaltet, und
wobei der Erfassungsschritt das Erfassen des in dem Abgassystem des Verbrennungsmotors vorhandenen Wassers basierend auf mindestens einem von einem Änderungsbetrag einer elektrostatischen Kapazität (Cp) pro Zeiteinheit zwischen dem Paar von Elektrodenelementen (32, 33) und einem Spitzenwert ($Cp_{pk}$) der elektrostatischen Kapazität (Cp) beinhaltet.

**6.** Verfahren nach Anspruch 4 oder 5,
wobei das Filterelement (31) eine Filterschicht ist, in der die Vielzahl von Zellen in einer Richtung parallel zueinander angeordnet ist, und
wobei das Paar der Elektrodenelemente (32, 33) ein Paar flacher plattenförmiger Elektroden ist, die so angeordnet sind, dass sie einander zugewandt sind, wobei die Filterschicht dazwischen angeordnet ist.

**Revendications**

**1.** Sonde comprenant :

une unité de sonde (30) disposée dans un système d'échappement d'un moteur à combustion interne et comprenant : un élément de filtre (31) ayant une pluralité de cellules divisées par des parois de partition poreuses et collectant la matière particulaire dans le gaz d'échappement ; et au moins une paire d'éléments d'électrode (32, 33) disposés pour faire face l'un à l'autre avec une de la pluralité de cellules interposée entre elles pour former un condensateur ; et
un contrôleur estimant une quantité de la matière particulaire dans le gaz d'échappement et détectant de l'eau présente dans le système d'échappement du moteur à combustion interne, sur la base d'une capacité électrique électrostatique (Cp) entre la paire d'éléments d'électrode (32, 33),
et **caractérisée en ce que** :
le contrôleur est configuré pour déterminer une quantité d'eau présente dans le système d'échappement sur la base d'une valeur de pic ($Cp_{pk}$) de la capacité électrique électrostatique (Cp) quand de l'eau est présente dans le système d'échappement, où à mesure que la quantité d'eau augmente la valeur de pic ($Cp_{pk}$) de la capacité électrique électrostatique s'élève.

**2.** Sonde (10A, 10B) selon la revendication 1,
dans laquelle le contrôleur estime la quantité de matière particulaire dans le gaz d'échappement sur la base d'une quantité de changement de capacité électrique électrostatique (Cp) entre la paire d'éléments d'électrode (32, 33) et détecte l'eau présente dans le système d'échappement du moteur à combustion interne sur la base d'au moins une d'une quantité de changement de capacité électrique électrostatique (Cp) par temps unitaire entre la paire d'éléments d'électrode (32, 33) et une valeur de pic ($Cp_{pk}$) de la capacité électrique électrostatique (Cp).

**3.** Sonde (10A, 10B) selon la revendication 1 ou 2,
dans laquelle l'élément de filtre (31) est une couche de filtre dans laquelle la pluralité de cellules sont disposées en parallèle dans une direction, et
où la paire d'éléments d'électrode (32, 33) est une paire d'électrodes en forme de plaque plate disposées pour faire face l'une à l'autre avec la couche de filtre interposée entre elles.

**4.** Procédé de détection d'eau présente dans le système d'échappement du moteur à combustion interne ; comprenant une sonde (10A, 10B) qui comprend :

une unité de sonde (30) est disposée dans un système d'échappement d'un moteur à combustion interne et comprend : un élément de filtre (31) ayant une pluralité de cellules divisées par des parois de partition poreuses et collectant la matière particulaire dans le gaz d'échappement ; et au moins une paire d'éléments d'électrode (32, 33) disposées pour faire face l'un à l'autre avec une de la pluralité de cellules interposée entre eux pour former un condensateur ; et une unité de commande (40), faisant fonctionner l'unité de commande (40) pour exécuter les étapes de :

estimation d'une quantité de la matière particulaire dans le gaz d'échappement sur la base d'une capacité électrique électrostatique (Cp) entre la paire d'éléments d'électrode (32, 33) ;
détection de l'eau présente dans le système d'échappement du moteur à combustion interne sur la base de la capacité électrique électrostatique (Cp) entre la paire d'éléments d'électrode (32, 33) ;
et **caractérisée par** :
la détermination d'une quantité d'eau présente dans le système d'échappement sur la base d'une valeur de pic ($Cp_{pk}$) de la capacité électrique électrostatique (Cp) quand de l'eau est présente dans le système d'échappement, où à mesure que la quantité d'eau augmente la valeur de pic (Cp$_{pk}$) de la capacité électrique électrostatique s'élève.

5. Procédé selon la revendication 4,
dans lequel l'étape d'estimation comprend l'estimation de la quantité de la matière particulaire dans le gaz d'échappement sur la base d'une quantité de changement de capacité électrique électrostatique (Cp) entre la paire d'éléments d'électrode (32, 33), et où l'étape de détection comprend la détection de l'eau présente dans le système d'échappement du moteur à combustion interne sur la base d'au moins une d'une quantité de changement d'une capacité électrique électrostatique (Cp) par temps unitaire entre la paire d'éléments d'électrode (32, 33) et une valeur de pic (Cp$_{pk}$) de la capacité électrique électrostatique (Cp).

6. Procédé selon la revendication 4 ou 5,
dans lequel l'élément de filtre (31) est une couche de filtre dans laquelle la pluralité de cellules sont disposées en parallèle dans une direction, et où la paire d'éléments d'électrode (32, 33) est une paire d'électrodes en forme de plaque plate disposées pour faire face l'une à l'autre avec la couche de filtre interposée entre elles.

FIG. 1

*FIG. 2*

EP 3 260 854 B1

FIG. 3A

FIG. 3B

13

*FIG. 4A*

*FIG. 4B*

*FIG. 4C*

*FIG. 5*

*FIG. 6A*

*FIG. 6B*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010275917 A
- US 20110047978 A
- DE 102009024782 A
- JP 2014159784 A
- WO 2011004747 A
- JP 2015031525 A